# EUROPEAN PATENT APPLICATION

(11) **EP 4 723 005 A1**
(43) Date of publication of application: **08.04.2026**
(21) Application number: 24218001.6
(22) Date of filing: 06.12.2024
(51) Int. Cl.: G06Q 10/08, B65G 1/04, G06Q 10/20

(54) **AN AUTOMATED STORAGE AND RETRIEVAL SYSTEM WITH A SECURITY GUARD BOT**

(30) Priority: 07.10.2024 US 202463704229 P
(71) Applicant: AutoStore Technology AS, 5578 Nedre Vats (NO)
(72) Inventor: JOSHI, Parth, 5578 Nedre Vats (NO); FJELDHEIM, Ivar, 5578 Nedre Vats (NO)
(74) Representative: Kilburn & Strode LLP

(57) **Abstract**

The disclosure relates to a method for enhancing safety in an automated storage and retrieval system, AS/RS, the method comprising: associating the SVU with one or more security guard bots, SGBs; preventing, using the one or more SGBs, a potential collision including the SVU within the AS/RS.

## Description

### TECHNICAL FIELD

The disclosure relates to an automated storage and retrieval system (AS/RS). More particularly, it relates to a method for enhancing safety in an AS/RS; an AS/RS comprising a central control system, a service vehicle unit, and a security guard bot; a security guard bot for an AS/RS; and a computer readable medium.

### BACKGROUND

Traditional storage solutions usually involve the arrangement of goods on rows of shelves within a warehouse. The shelf location for each item is recorded in an inventory, and goods are retrieved from the shelves by a stock picker. The shelves are restocked and the inventory updated, as needed, as goods enter and leave the warehouse.

Warehouse workers may be assisted by robotic pickers and by automated inventory management systems. Automated transit systems may also be implemented in traditional warehouse set-ups to move goods from their inventory location to a picking and/or packing station.

An alternative to a traditional warehouse set-up is an automated storage and retrieval system (AS/RS) in which robots retrieve items from their logged location within the warehouse and deliver the items to a packing station or port. Such systems can reduce or eliminate the space needed to pass between rows of shelves to access stock, thereby removing the need for broad aisles within the warehouse. One example of such a system involves placing goods in bins or containers that are configured to be stacked, side by side, within a three-dimensional grid. A rail system is arranged on top of the grid, along which robotic container-handling vehicles configured to lift containers from the grid can travel. The container-handling vehicles are configured to transport containers from the grid and to deliver them to ports or stations at the periphery of the grid so that the goods within the container can be picked and packed.

Such AS/RS systems occasionally require maintenance, and in doing so service vehicle units, and/or service personnel may require access to the grid. For example, service personnel can gain access to parts of the grid using service vehicles arranged to operate on the rail system.

When accessing the grid using a service vehicle or "service vehicle unit, SVU", managing the safety of the service vehicle and the service personnel is of paramount importance. For example, when on the grid, either moving to an area needing maintenance or at a repair site, an SVU is vulnerable to a collision from a robot on the grid, say, that has malfunctioned. One known method for managing the safety of units and/or service personnel in an AS/RS is temporarily shutting down operations on the grid such that the maintenance task can be safely performed by the service personnel, using the service vehicle, without risk of interference from other robots and/or vehicles. By shutting down the grid, such a method may reduce the efficiency, throughput and/or productivity of the AS/RS.

One or more aspects of the invention of the present application are set out in the claims.

### BRIEF DESCRIPTION OF THE DRAWINGS

The disclosure will now be described in more detail in connection with a number of exemplary embodiments shown in the accompanying drawings, in which:
Fig. 1 shows a perspective view of a storage system comprising a grid and a plurality of robotic container-handling vehicles configured to retrieve and/or rearrange goods stored within the grid;
Fig. 2 shows a top view of the system of Fig. 1;
Fig. 3A shows a side view of a first robotic container-handling vehicle suitable for use in the system of Fig. 1;
Fig. 3B shows a side view of a second robotic container-handling vehicle suitable for use in the system of Fig. 1;
Fig. 3C is a perspective side view of the robot of Fig. 3B;
Fig. 4 shows a computing device for implementing the operations described herein;
Fig. 5a shows a top view of an automated storage and retrieval system embodiment in a first arrangement according to the present disclosure;
Fig. 5b shows a top view of an automated storage and retrieval system embodiment in a second arrangement according to the present disclosure;
Fig. 6 shows an embodied method for enhancing the safety of an automated storage and retrieval system according to the present disclosure.

### DETAILED DESCRIPTION

In overview, the disclosure relates to a method for enhancing safety in an automated storage and retrieval system (AS/RS). The method comprises associating a number of security guard bots (SGBs) with a service vehicle unit, SVU. The service vehicle unit can be used by service personnel to operate on the grid in order to perform maintenance operations. The SGBs can prevent any potential collisions involving the SVU, improving the safety of the AS/RS. The SGBs may prevent any potential collisions by moving to form a perimeter 518 around a region of the AS/RS comprising the SVU whilst the SVU is moving or performing maintenance operations. A central control system (CCS) can send control signals to control the operations of the AS/RS, SVU and SGBs. Additionally or alternatively, the SGBs and SVU can communicate directly and in some embodiments can determine their operations independently in a decentralised manner. The SGBs can physically block other robots in order to prevent a collision with the SVU. By preventing collisions involving the SVU, the SVU can perform maintenance operations on the grid without requiring the grid to be shut down, improving the efficiency, productivity and throughput of the AS/RS. The proposed method can also be stored as instruction on a computer readable medium.

The present disclosure is further directed towards an AS/RS comprising a SVU and number of SGBs, wherein the SGBs can be associated with the SVU in order to prevent collisions involving the SVU. Optionally, the AS/RS can further comprise a CCS communicatively linked with the SVU and/or the SGBs.

### Automated storage and retrieval system overview

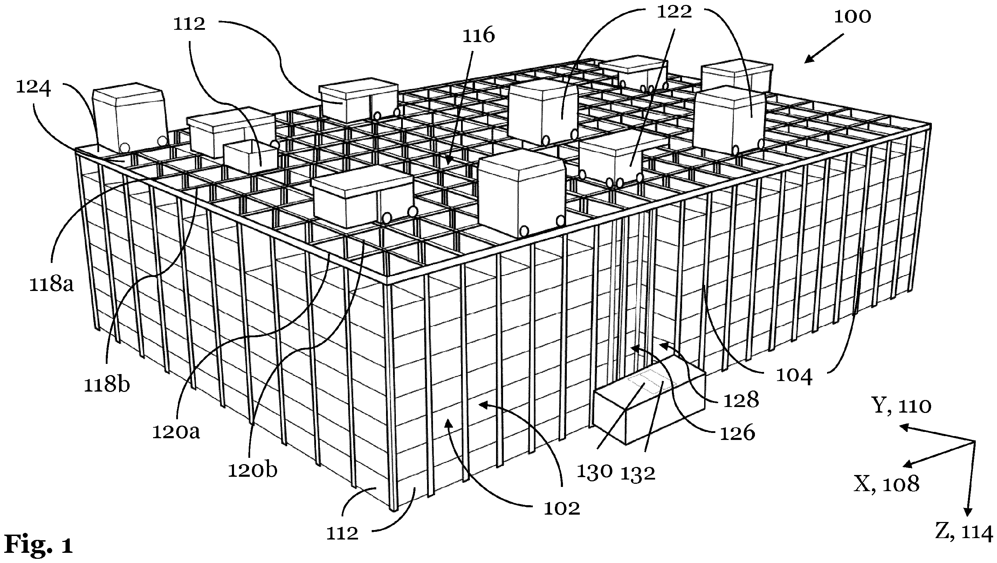

Referring to the embodiment shown in Fig. 1, a grid 100 comprises a frame formed by a plurality of generally rectilinear, adjacent vertical columns 102 formed between vertical frame members 104 and extending in the X and Y directions 108, 110. The grid elements may be fabricated of any appropriate material; for example, the frame members may be formed of extruded aluminium. Storage containers or bins 112 are stacked on top of each other, preferably in a self-supporting manner, in the Z direction 114 in the columns 102, forming a storage volume of storage cells for respective bins 112 extending in the X, Y and Z directions 108, 110, 114.

A rail system or network 116 is formed on top of the grid 100 and comprises pairs of vehicle rails or tracks 118a, 118b and 120a, 120b, respectively extending in the X and Y directions 108, 110. Robotic container-handling vehicles, or robots, 122, which can be of a range of size, shape and function, are provided and configured to run on the rails 118, 120 and to transport bins 112 in both the X and Y directions 108, 110. The robots 122 are additionally configured to lift and lower bins 112 from/into the columns 102 in the Z direction 114, the bins 112 optionally being guided by the vertical frame members 104. The robots 122 access the bins 112 via access openings 124 above the columns 102 and formed between the rails 118, 120.

Some columns 102 may be used for alternative purposes than bin storage. For example, port columns 126, 128 comprise port or access columns allowing transfer of a bin 112 in and/or out of the grid 100. Port columns 126, 128 provide a vertical channel for lifting of a bin 112 from, or lowering of a bin 112 to, a port or ports 130, 132. The ports 130, 132 are shown in Fig. 1 at the lowest level of the grid, however ports can be located at any vertical position along the column. The respective port columns 126, 128 can be assigned for removing ('drop-off) and/or returning or delivering ('pick-up') bins 112 from/to the grid 100. The ports 130, 132 are therefore configured to allow bins 112 to be removed and reintroduced (horizontally) into the associated port column. As such, a port 130, 132 can comprise a conveyor (not shown in Fig. 1) onto which a bin 112 may be lowered and transported horizontally out of the port column. The port columns 126, 128 include an opening or access point through which bins 112 can enter and leave the column.

Bins 112 can be transported along the top of the grid 100 to and/or from a port column 126, 128 by robots 122, and from a port 130, 132 to a location outside the grid 100, which may be an access station (not shown) for processing of the bin 112 or its contents, such as a picking station for adding content to, or removing content from, the bin 112. In alternative examples (not shown), the bin 112 may be transported to a port of another grid on the same or another level, or to an external facility. Transport of bins 112 to and from ports 130, 132 may be by any appropriate means (not shown) including conveyors, transport vehicles, lifts or robots.

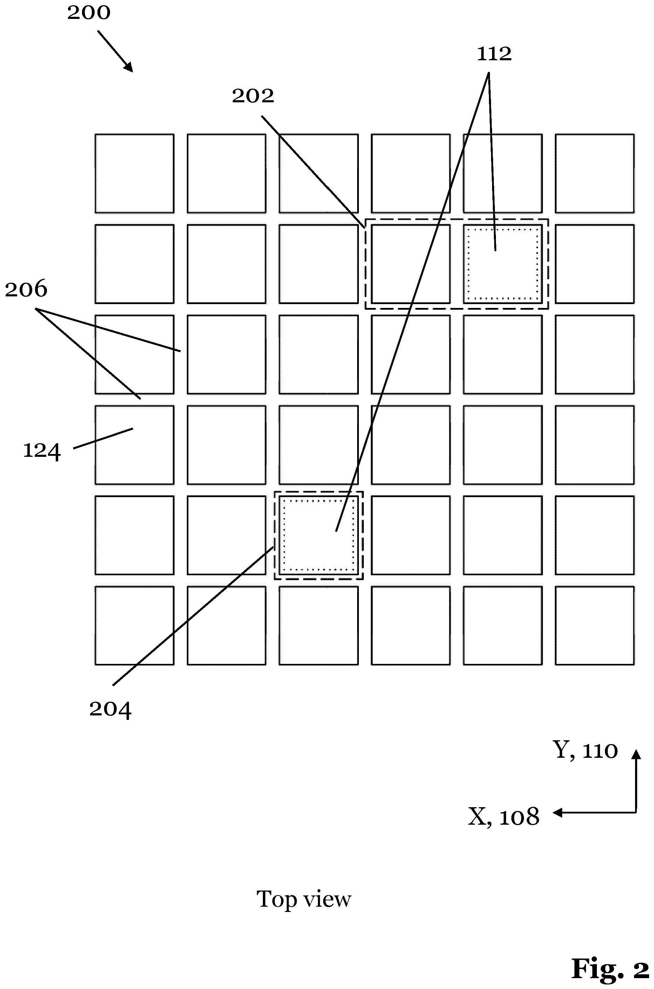

Referring to the embodiment shown in Fig. 2, the X-Y configuration 200 of the rail system 116 can be seen in more detail, together with robots 202, 204 of different types. The rail system includes rails 206 defining between them vertical column access openings 124 for access to bins 112. The rails 206 can be any appropriate type for permitting travel of the robots 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

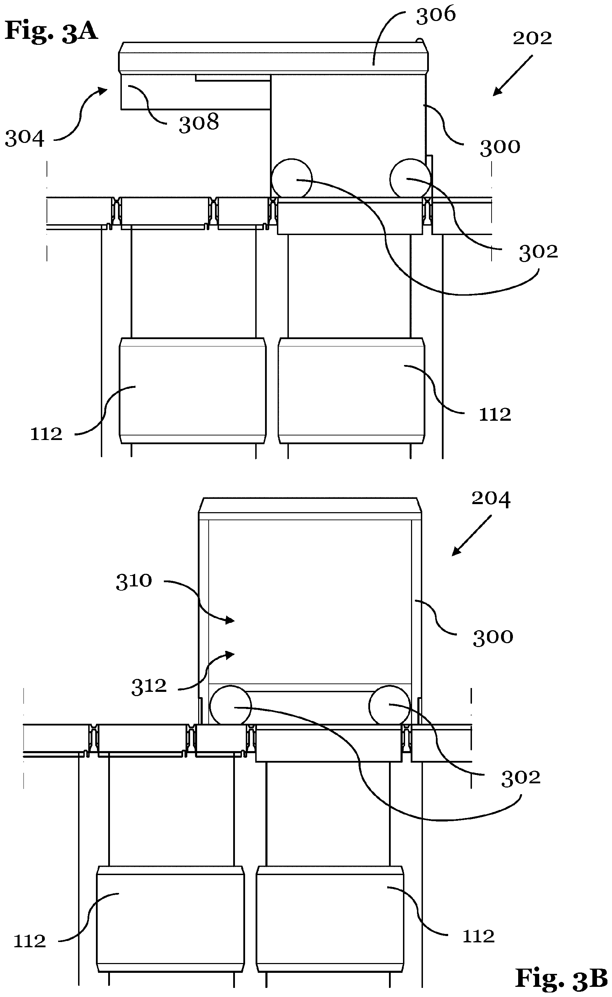

A first, 'cantilever' type of robot 202 is shown in more detail in Fig. 3A and includes a body 300, a set of wheels 302 and a lifting device 304. The body 300 contains operational equipment (not shown) for the robot 202 including drive, power and control systems. The wheels 302 permit movement of the robot 202 in one of the X and Y directions, an additional set of wheels (not visible in this view) permitting movement in the other of the X and Y directions, in both cases along the respective rails or tracks 206. One or both sets of wheels can be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306. The gripping device 308 is configured to grip or engage a bin 112; for example, by gripping a part of the bin 112, or by passively or actively engaging a suitably configured part of the bin 112.

A second, 'internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space for one or more bins 112, for use, for example, while transporting the bin 112.

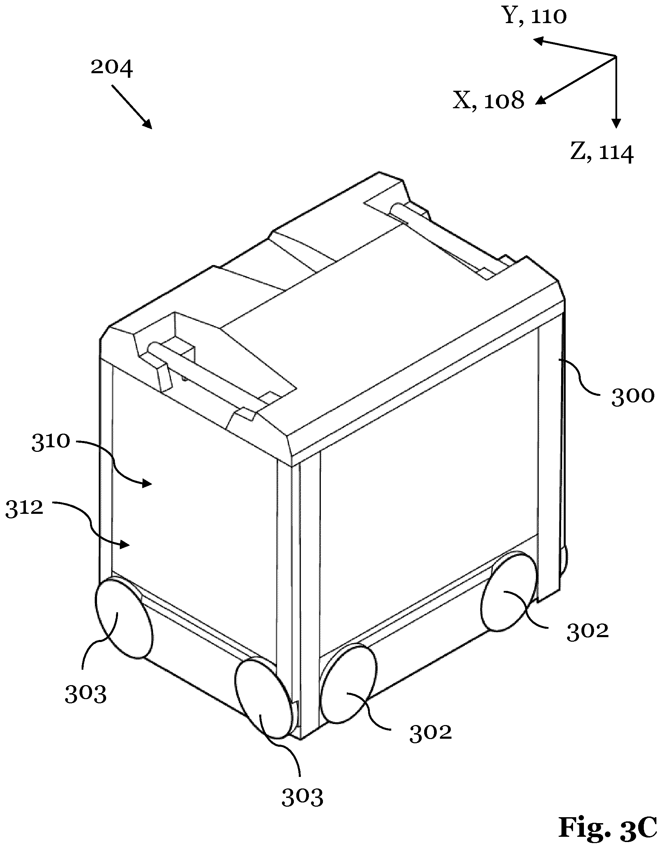

Fig. 3C shows a perspective side view of the robot of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the robot 204 in the X and Y directions on the first and second set of wheels 302, 303 respectively. The first and second set of wheels 302, 303 shown in Fig. 3C may be configured to be independently lowered into engagement with the rails (and conversely raised out of engagement with the rails) to allow the robot 202 to move in the X and Y direction across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

### Control and monitoring system

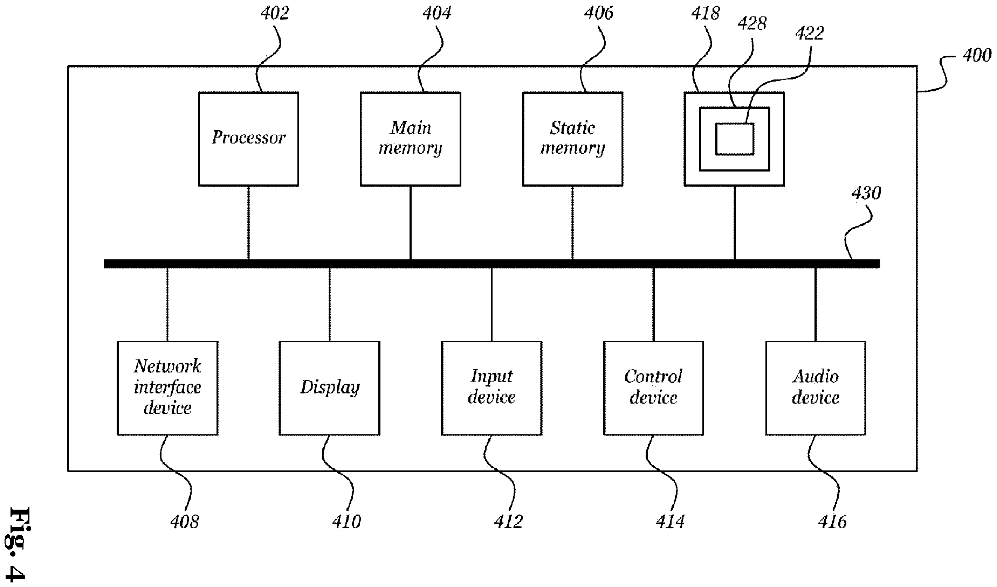

Control and monitoring of the automated storage and retrieval system, including monitoring and storing bin position and controlling bin delivery, retrieval and transport and robot routing and collision avoidance, is performed by a control system, or "central control system", shown in Fig. 4 in communication with the robots and/or other controllable system components. Control can be performed locally or remotely and may be implemented by a processing system, for example in the form of a computing device. Accordingly, the methods described herein may form all or part of a computer-implemented method, or a system configured to perform the methods described herein.

With reference to Fig. 4, a processing system 400 suitable for carrying out the methods described herein will now be described. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

### Operation of the automated storage and retrieval system

In operation, each bin 112 is given a unique identifier, which may be marked on the bin 112 using a computer-readable identifier (e.g., a barcode, quick-response code or radio-frequency identification tag) to ease identification of the bin 112. A database of the processing system 400 stores, in association with the unique identifier, the position and, optionally, content of each bin 112. When a bin 112 is moved (e.g., when it is retrieved from the grid 100), the database is updated to record its change in position.

When it is desired to retrieve a bin 112 from the grid 100, under control of the processing system 400, a robot 202, 204 is routed via the rail system 116 to the vertical column 102 including the storage cell where, according to the database, the bin 112 is positioned, and the lifting device 304, 312 is positioned (according to robot type) over the corresponding access opening 124, either adjacent or below the robot 202, 204. The robot 202, 204 lowers the gripping device 308 which engages, grips and lifts the bin 112 to the robot 202, 204. The robot 202, 204 then transports the bin 112, for example, to the drop-off port column 126, 128 for delivery to the port 130, 132 and subsequent processing external to the grid 100. In the event that the target or designated bin 112 is below other bins in the stack then the robot 202, 204 or multiple robots, which may be dedicated to the task, are controlled in a 'digging' operation to sequentially lift and reposition, temporarily or permanently, bins above the target bin 112 in order for it to be retrieved. It will be appreciated that other operations in relation to the bin 112 can be carried out in a similar manner. For example, a bin 112 can be delivered for storage in the grid 100 at the port 130, 132 of the pick-up port column 126, 128, gripped and lifted by a robot 202, 204 and delivered to the desired storage cell, bins above the desired position being repositioned if necessary as discussed above.

### Description of specific improvements.

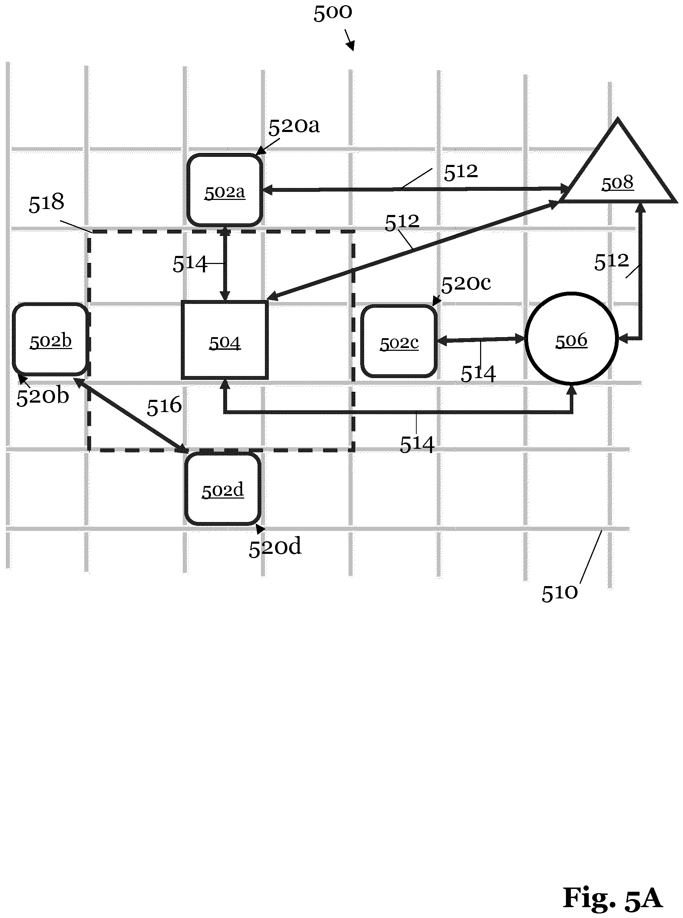

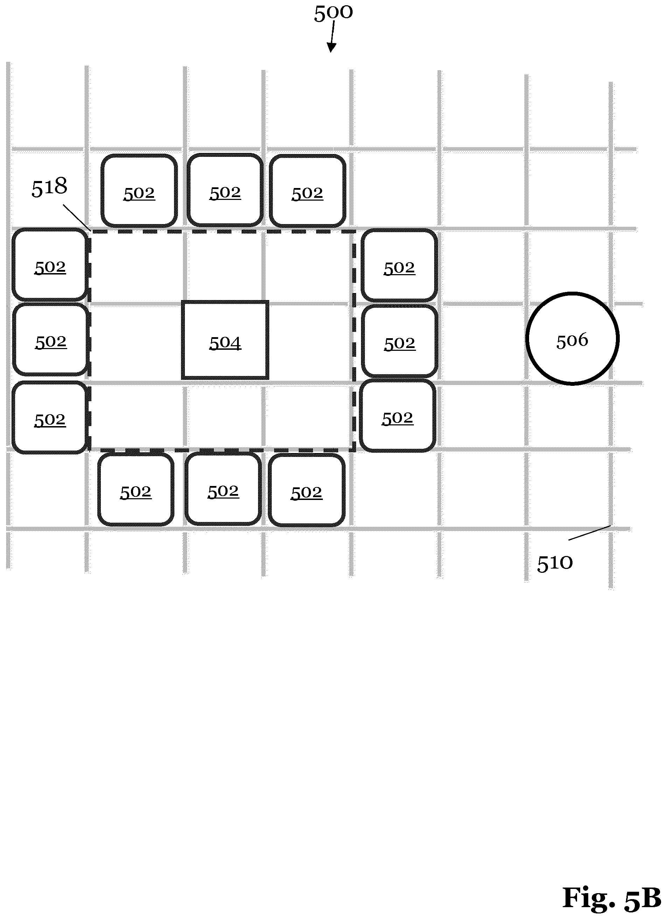

Referring to the embodiment of the present disclosure in Fig. 5a, an AS/RS 500 is shown, wherein the AS/RS 500 can comprise one or more security guard bots (SGBs) 502a-d, a service vehicle unit (SVU) 504, a robot 506 and optionally a central control system (CCS) 508 and/or a grid 510. The SGBs 502a-d, SVU 504 and robot 506 can be configured to operate on the grid 510 and/or to communicate with the CCS 508. Although Fig. 5 is discussed with reference to the grid 510, it will be appreciated that the present disclosure is also directed towards embodiments of an AS/RS 500 which do not utilize a grid 510. The SGBs 502a-d are configured to protect the SVU 504 from collisions whilst operating on the grid 510, for example, a collision with the robot 506, thereby improving the safety of the AS/RS 500. The CCS 508 can communicate control signals to one or more of the SGBs 502a-d, SVU 504 and robot 506; and/or one or more of the SVU 504, SGBs 502, or the robot 506 can communicate control signals with each other to in order to facilitate the safe performance of a maintenance task by the SVU 504, and without shutting down the entire grid 510. By not shutting down the entire grid, the proposed system can thereby improve efficiency and productivity as regions of the gird unaffected by the maintenance task can continue to operate.

The security guard bots (SGBs) 502a-d can include the features of the robots 202, 204 discussed with reference to Figs. 3a-c. A SGB 502 comprises one or more communication modules capable of transmitting and receiving signals via one or more communication channels. For example, the one or more communication modules could comprise a Bluetooth module, ZigBee module, z-wave module, near-field communication (NFC) module, Wi-Fi module, infrared (IR) communication module, radio-frequency identification (RFID) module, thread module, ultra-wideband (UWB) module, cellular (LTE, 5G, GSM, etc.) module and/or a 6LoWPAN module. The SGB 502 can also comprise a reinforced frame suitable for absorbing the impact of a collision with another robot and/or vehicle, such as the robot 506. The security guard bot 502 can also comprise a sensor and means for processing input from the sensor. That is to say the security guard bot 502 can be internet-of-things (IoT) enabled. The sensor can be suitable for detecting the distance, speed and/or direction of travel of an object, robot and/or vehicle, such as the robot 506. For example, the sensor can comprise an ultrasonic sensor, infrared (IR) sensor, lidar sensor, time-of-flight (ToF) sensor, radar sensor, optical flow sensor, sonar sensor, proximity sensor, structured light sensor and/or a camera. The SGB 502 can comprise one or more further sensors, for example, a sensor suitable for determining the location of the SGB 502 within the AS/RS 500.The processing means are suitable for processing the sensor input, processing, determining and/or generating control signals and transmitting and/or receiving signals via the communication means. The processing means can be suitable for, performing route planning, performing obstacle detection/avoidance and/or determining and controlling any operations of the SGB 502 in the AS/RS 500 based on the input of the one or more sensors and/or control signals. For example the processing means can comprise a microcontroller (MCU), system-on-chip (SoC), field-programmable gate array (FPGA), digital signal processor (DSP), single-board computer (SBC), central processing unit (CPU), graphics processing unit (GPU) and/or application-specific integrated circuit (ASIC).

The service vehicle unit (SVU) 504 can be used by service personnel in order to access a region of the AS/RS to complete a maintenance task. The SVU can comprise propulsion means or displacement means. That is to say the SVU 504 can comprise means for moving on a grid 510 of the AS/RS 500. As but one example, the SVU 504 can comprise wheels similar to the wheels 302 of the robots 202, 204 discussed with reference to Figs. 3a-c. The SVU 504 can comprise means for lifting or otherwise interacting with a robot 506 of the AS/RS. The SVU 504 can accommodate a service person and can comprise one or more communication modules capable of transmitting and/or receiving signals via one or more communication channels. For example, the one or more communication modules could comprise a Bluetooth module, ZigBee module, z-wave module, near-field communication (NFC) module, Wi-Fi module, infrared (IR) communication module, radio-frequency identification (RFID) module, thread module, ultra-wideband (UWB) module, cellular (LTE, 5G, GSM, etc.) module and/or a 6LoWPAN module. The SVU can be remotely operated by a service person, controlled by the CCS 504 and/or controlled by a processing means of the SVU 504. The SVU 504 can comprise a sensor. That is to say the SVU 504 can be internet-of-things (IoT) enabled. The sensor can be suitable for detecting the location of the SGB in the AS/RS 500. For example, the sensor can comprise a GPS sensor, Wi-Fi positioning system (WPS) module, ultra-wideband (UWB) sensor and/or RFID sensor. The SVU 504 can comprise one or more further sensors, for example, a sensor suitable for object detection. The processing means are suitable for processing the sensor input, processing and/or generating signals and transmitting and/or receiving signals via the communication means. The processing means can be suitable for, performing route planning, performing obstacle detection/avoidance and/or determining and controlling any operations of the SVU 504 in the AS/RS 500 based on the input of the one or more sensors and/or control signals. For example the processing means can comprise a microcontroller (MCU), system-on-chip (SoC), field-programmable gate array (FPGA), digital signal processor (DSP), single-board computer (SBC), central processing unit (CPU), graphics processing unit (GPU) and/or application-specific integrated circuit (ASIC).

The robot 506 can be the robot 202, 204 discussed with reference to figures 3a-c. The robot 506 can be any robot or vehicle configured to operate on the grid 510. The robot 506 can comprise one or more communication modules suitable for communicating with the SGBs 502, SVU 504 and/or CCS 508.

The central control system 508 can comprise the features described with reference to the control system shown in Fig. 4. The central control system 508 can also comprise one or more communication modules capable of transmitting and receiving signals via one or more communication channels. For example, the one or more communication modules could comprise a Bluetooth module, ZigBee module, z-wave module, near-field communication (NFC) module, Wi-Fi module, infrared (IR) communication module, radio-frequency identification (RFID) module, thread module, ultra-wideband (UWB) module, cellular (LTE, 5G, GSM, etc.) module and/or 6LoWPAN module. The central control system can comprise one or more routers positioned on the grid 510 and/or within the AS/RS system, wherein the routers are designed to receive, transmit, relay and/or process signals. The routers can improve the robustness and/or bandwidth of communication channels between the CCS 508 and the rest of the AS/RS 500.

The grid 510 can be a rail system, such as the rail system 116 described with reference to Fig. 1. That is to say, the grid 510 can comprise a rail system comprising at least a first set of parallel rails arranged in a horizontal plane and extending in a first direction, and at least a second set of parallel rails arranged in the horizontal plane and extending in a second direction which is orthogonal to the first direction, the at least first and second sets of rails together defining a grid of grid cells. Each grid cell of the grid 510 maybe referenced using coordinates.

The one or more SGBs 502a-d can be positioned as to form a perimeter 518 around the SVU 504. In the exemplary configuration shown in Fig. 5a, the four SGBs 502a-d are positioned such that they provide complete or partial coverage around the SVU 504. From this arrangement, when on the grid 510, one or more SGBs 502 can travel on the rails of the grid 510 in order to intercept a robot 506 moving towards the SVU 504. In an alternative configuration of AS/RS 500, such as the one shown in Fig. 5b, the one or more SGBs 502 can form an impenetrable perimeter 518 around the SVU 504 such that the SVU 504 is inaccessible from any direction on the grid 510 without the SGBs 502 having to move to intercept the robot 506. In such an arrangement, it may not always be necessary for every grid cell in the perimeter 518 to be occupied by an SGB 502 as in some AS/RS 500 each robot 506 may cover more than one grid cell when operating on the grid 510. A perimeter 518 with gaps between each SGB 502 smaller than the size of the smallest robot 506 operating on the grid 510, is still be impenetrable.

A region of the grid 510 relative to the one or more SGBs 502a-d can define a 'maintenance zone'. The maintenance zone can be the region of the grid 510 within the perimeter established by the positioning of the one or more SGBs 502. A maintenance zone can be established by the SGBs at the periphery of the grid 510 whilst the SVU 504 is off-grid, such that the SVU 504 can enter the grid 510 into the maintenance zone. The maintenance zone can be defined around the SVU 504. The maintenance zone can include a dynamic region around the SVU 504 which is displaced to follow the SVU 504 as it moves on the grid 510, for example as it moves to a region of the grid 510 in which it needs to perform a maintenance and/or when it is moving to the periphery of the grid 510 in order to leave the grid 510 after performing a maintenance task. The maintenance zone can include the region of the gird 510 required to perform a maintenance task (repair region) when the SVU is in position to perform the maintenance task. The maintenance zone can be a region coincident with the perimeter 518 formed by the SGBs, or may be a region within, or extending outside of that perimeter 518. The maintenance zone can comprise a buffer region around the region of the grid 510 required by the SVU 504 to perform a maintenance. The buffer region can improve the safety of the system 500 as in the case of a breach in the perimeter 518 established by the SGBs 502, the buffer region affords the system an increased time period for which the SVU 504 can take appropriate action, or further action, to prevent a collision, such as by moving position on the grid 510. The maintenance zone can comprise a further buffer region around the perimeter established by the SGBs 502. The further buffer region can improve the safety of the AS/RS 500 by providing a region around the SGBs 502 in which preventive actions can be taken in order to reduce the need for the SGBs 502 to physically block a robot 506 in order to prevent a potential collision.

The SGBs 502a-d, SVU 504, robot 506 and/or CCS 508 can communicate using the one or more communication channels supported by the respective communication modules of each device. For example, the SVU 504 can be communicatively couple to the CCS 508 using a first communication channel 512, and/or communicatively coupled to each of the one or more SGBs 502a-d and/or the robot 506 using a second communication channel 514. The one or more SGBs 502a-d can be communicatively coupled to each other using a third communication channel 516 and/or communicatively coupled with the CCS 508 using the first communication channel 512. The robot 506 can be communicatively coupled with the CCS 508 using the first communication channel 512. The second communication channel 514 and third communication channel 516 can be the same. The first communication channel 512 being separate from the second communication channel 514 and third communication channels 516 ensures signals from the CCS 508 do not interfere with communication signals between the SGBs 502, the robot 506 and/or the SVU 504, thereby improving the robustness of communication in the system. In embodiments in which only the first communication channel 512 is used, the AS/RS 500 can be considered to be centralized. In embodiments in which only the second communication channel 514 and/or third communication channel 516 are used, the AS/RS 500 can be considered to be decentralized. In embodiments in which the firs, second and third communication channels 512, 514, 516 are all used, the AS/RS 500 can be seen to comprise both centralized and decentralized elements.

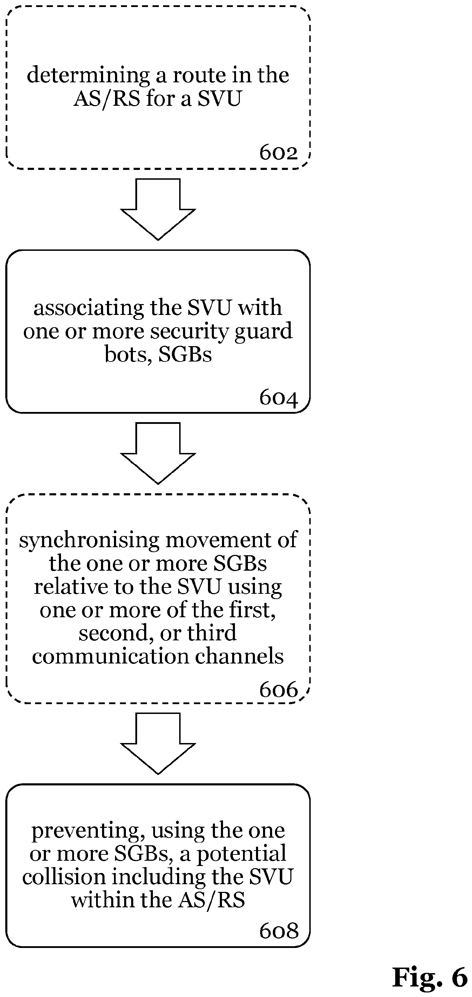

Fig. 6 shows an method 600 for enhancing safety in an automated storage and retrieval system (AS/RS) according to an embodiment of the present disclosure. The method 600 can be performed by the AS/RS system 500 of Figs. 5a,b.

At operation 602, the method 600 can optionally include determining a route in the AS/RS 500 for a SVU 504. The route can be determined by the CCS 508 and/or SVU 504. The route can be determined based on: the operational status of the grid 510; the location of the SVU 504 wherein the location of the SVU 504 can be determined using a sensor on the SVU; characteristics of the SVU 504, for example, battery level; and/or the routes of any other robots 502, 506 or vehicle 504 in the AS/RS 500. The route can be determined based on signals from the robot 506 and/or SGBs 502. The CCS 508 can determine the route based on signals from the SVU 504. The route can provide routing for the SVU 504 from its current location, which can be on the grid 510 or off-grid, to the region of the grid 510 in which the SVU 504 is required to perform maintenance. The route can provide routing for the SVU 504 from the region of the grid 510 in which the SVU 504 is required to perform maintenance to an off-grid position.

Determining the route in the AS/RS 500 for a SVU 504 can comprise transmitting, by a service vehicle unit (SVU) 504, to a central control system (CCS) 508 and/or the SGBs 502, a location of the SVU 504. The location of the SVU 504 can be determined using a sensor on the SVU 504 and transmitted to the CCS 508 using one or more communication modules. When the SVU 504 is on the grid 510, the location can be transmitted as coordinates of the grid 510. That is to say, the SVU 504 can transmit the coordinates of the grid cell it is currently located in. Alternatively, the location may be an off grid 510 location such as an onboarding location where the SVU 504 is waiting to move onto the grid 510.

At operation 604, the method 600 includes associating the SVU 504, with one or more security guard bots (SGBs) 502. This method step can be performed by the CCS 508 and/or the SVU 504 and one or more SGBs 502. Associating the one or more SGBs 502 with the SVU 504 can comprise, for example: communicative coupling the SVU 504 and the one or more SGBs 502; creating a physical relationship between the SVU 504 and the SGBs 502; positioning the SGBs within a threshold proximity of the SVU 504, wherein the threshold proximity can be dynamically determined, for example, based on a maintenance zone (discussed with reference to operation 604); coupling the movement of the SVU 504 and the one or more SGBs 502, wherein coupling the movement can comprise synchronising the movement of the SGBs 502 and the SVU 504; and/or coupling the route being followed by each of the one or more SGBs 502 with the route being followed by the SVU 504, wherein coupling the route can comprise updating and/or determining the a route for the one or more SGBs 502 based on the route being followed by the SVU 504. The one or more SGBs 502 can be communicatively coupled with the SVU 504 by, for example, assigning them to the same multicast communication group and/or mesh network. The mesh network and/or multicast group can be associated with the first communication channel 512, second communication channel 514 and/or third communication channel 516. The one or more SGBs 502 can be associated with the SVU 504 based on, for example, the current location of the SVU 504, the route the SVU 540 is following, the maintenance task being performed by the SVU 504 and/or the operational status of the grid 510, SVU 504 and/or each of the one or more SGBs 502.

Operation 604 of method 600 can further comprise transmitting a first signal to the one or more SGBs 502. The CCS 508 and/or SVU 504 can transmit the first signal to each of the one or more SGBs 502 directly. The CCS 508 and/or SVU 504 can transmit the first signal to at least a first SGB 502a of the one or more SGBs 502 and the first SGB 502a and each SGB 502 that receives the first signal can propagate the first signal to one or more other SGBs 502b-d, until each of the one or more SGBs 502 have received the first signal. The first signal is configured to cause each of the one or more SGBs 502 to move to a respective security location 520a-d in proximity to the location and/or route of the SVU 504 received in operation 602. The first signal can be configured to cause each of the one or more SGBs 502 to move to a respective security location 520a-d in proximity to a maintenance zone. The first signal can comprise one or more grid cell coordinates associated with one or more security locations. Additionally or alternatively, the SGBs 502 can determine the security location 520 independently without requiring the first signal. The SGBs 502 can determine the security location 520 based on, for example, a maintenance zone, location of the SVU 504 and/or route of the SVU 504.

Operation 604 of method 600 (or operation 606) can comprise determining, by the CCS 508, SVU 504 and/or SGBs 502, a maintenance zone around the SVU 504. The maintenance zone can comprise a region of that AS/RS 500 in which the SVU 504 is required to be located in order to perform maintenance, for example maintenance on the grid 510, a port and/or a robot 506. The maintenance zone can be determined based on the operational region of the repair region the SVU 504 requires access to in order to perform a maintenance task. Determining the maintenance zone based on operational region the SVU 504 requires access to in order to perform the maintenance task can comprise identifying the maintenance task to be performed, identifying the location of the maintenance task and assigning a maintenance zone of pre-determined size and shape around the maintenance task location/repair region. For example, if a charging port requires maintenance, a maintenance zone of a predetermined size of 4 grid cells of the grid 510 could be determined. Alternatively or additionally, determining the maintenance zone based on operational region the SVU 504 requires access to in order to perform the maintenance task can comprise determining a large area around a malfunctioning robot's 506 last known location. The maintenance zone can be reviewed by service personnel and the size and/or location can be manually adjusted, determined and/or confirmed. The maintenance zone can comprise a buffer region around the repair region. The maintenance zone can be dynamically determined such that it is updated based on the movement of the SVU 504, the location of the SVU 504, the status of the maintenance task the SVU 504 is performing and/or the operational status of the grid 510. The maintenance zone can be a region of the grid 510. The CCS 508, SVU 504 and/or SGBs 502 can determine one or more security locations 520 for the one or more SGBs 502 based on the determined maintenance zone. For example, the one or more security locations 520 may be located at the perimeter 518 of the maintenance zone. The one or more security locations 520 may partially or completely surround the maintenance zone. That is to say, the one or more security locations 520 can be determined to be at positions where the SGBs 502 will be effective to prevent access to the maintenance zone from any other entities on the grid 510, for example, a robot 506 that has malfunctioned. The CCS 508, SVU 504 and SGBs 502 can determine the number of SGBs 502 to associate with the SVU 504 based on the size of the maintenance zone and/or location of the SVU 504. For example, the minimum number of SGBs 502 required to completely or substantially provide coverage of the perimeter 518 of the maintenance zone can be associated with the SVU 504. The one or more security locations 520 may be dynamically determined and can be updated based on changes to the maintenance zone, the detection of a robot 506 moving towards the maintenance zone, the movement of the SVU 504, the location of the SVU 504 and/or the operational status of the grid 510. That is to say, the CCS 508, SVU 504 and/or SGBs 504 can dynamically perform operation 604 of method 600 in order to dynamically update the maintenance zone and/or security locations.

At operation 606, the method 600 optionally includes, when there is more than one SGB 502, synchronising movement of the one or more SGBs 502 relative to the SVU 504 using one or more of the first communication channel 512, second communication channel 514, or third communication channel 516. This can comprise transmitting, by the CCS 508, SVU 504 and/or SGBs 504, synchronisation data associated with the first signal. The synchronisation data can be transmit with the first signal at operation 604 or subsequent to the transmission of the first signal. The synchronisation data can facilitate the synchronised movement of the one or more SGBs 502 such that they move and remain as a 'train' together with the SVU 504 towards a desired location, moving to their respective security locations 520 in a manner such that the distance between each SGB 502 is maintained during movement effective for providing coverage/collision prevention. Here, the maintenance zone is an area around the SVU 504 to protect the SVU 504 while in transmit to a repair site on the grid 510. Synchronisation can maintain the perimeter 518 established by the one or more SGBs 502 during movement ensuring that the SVU 504 is be protected. This synchronised movement can be established before the SGBs 502 and SVU 504 enter the grid 510. For example, the SGBs 502 can move in sync and establish a perimeter 518 around the SVU's 504 entry point to the grid 510 such that the SVU 504 is protected as it enters the grid 510, ensuring its safe entry. This in turn means that, by using the train of the SVU 504 with synchronised SGBs 502, the grid 510 does not have to be shut down in order to move the SVU 504 into the required maintenance location since the SVU 504 can be protected during said movement by the SGBs 502. Synchronised movement can occur any time the maintenance zone or security locations 520 are updated as part of operation 60₄. Synchronising movement can be achieved by using the first communication channel 502, second communication 514 and/or third communication channel 516. That is to say the SGBs 502 and SVU 504 can communicate directly with each other in order to synchronise movement and/or communicate with the CCS 508. Synchronising movement can comprise propagating the synchronisation data between SGBs 504 and/or synchronising the clocks of the one or more SGBs 502 with each other and, optionally, the SVU 504. The synchronisation data can comprise information related to movement timing, movement speed and/or routing information associated with the movement of the one or more SGBs 502 to the one or more security locations and/or the route of the SVU 504.

At operation 608, the method 600 includes preventing, using the one or more SGBs 502, a potential collision including the SVU 504 within the AS/RS 500. A collision can be with any entity on the grid 510, such as a robot 506, or part of grid 510 that is in one example broken; and the collision can be the SVU 504 moving into the entity, or being hit by another entity. A potential collision involving the SVU 504 in one example is a collision that has not yet happened, but that is detected will happen if preventative action is not taken. Preventing, using the one or more SGBs 502, a potential collision including the SVU 504 within the AS/RS 500 can comprise detecting, by the one or more SGBs 502 and/or the CCS 508 a potential collision comprising a detected robot 506 moving within the AS/RS 500 on a collision course with the SVU 504. The SGBs 502 can detect a potential collision comprising a robot 506 moving within the AS/RS 500, which may be a malfunctioning robot in one example, colliding with the SVU 504 using a sensor of one or more of the one or more SGBs 502. The sensor can detect the distance of a robot 506, the direction the robot 506 is moving and/or the speed the robot 506 is moving. Alternatively, the CCS 508 can determine the distance of the robot 506, the direction the robot 506 is moving and/or the speed the robot 506 is moving and transmit this information, optionally as a second signal, to the SGBs 502 as part of detecting the potential collision. The SGBs 502 may process the sensor input and/or information from the CCS 508 to defer a path and/or route the robot 506 is travelling and extrapolate said route and/or path to determine if it is on a collision course with the SVU 504. That is to say, the SGBs 502 can process the input from the sensor and/or the CCS 508 to determine the path the robot 506 is travelling and to determine if the robot 506 is travelling towards the maintenance zone and/or the SVU 504. Alternatively, the CCS 508 can determine the path the robot 506 is travelling and/or determine if the robot 506 is travelling towards the maintenance zone and/or the SVU 504 and transmit the determination to the SGBs 502. If the robot is travelling towards the maintenance zone and/or the SVU 504, the SGBs 502 and/or the CCS 508 can determine that there will be a potential collision. If the CCS 508 detects a potential collision it can communicate this to the one or more SGBs 502 and/or SVU 504 in order to take preventative action.

If one or more SGBs 502 detect a potential collision with a robot 506, at least one SGB 502 can transmit a third signal to the SVU 504. Additionally or alternatively, the CCS 508 can transmit the third signal to the SVU 504 based on its own detection of a potential collision. The third signal is configured to cause the SVU 504 to move to a location which is not in the path of the robot's 506 identified direction of travel. In doing so, the potential collision with the robot 506 is prevented. Additionally or alternatively, at least one SGB 502 and/or the CCS 508 can transmit a fourth signal to the robot 506. The fourth signal is configured to cause the robot 506 to move to prevent the collision. The fourth signal can be configured to cause the robot 506 to stop moving and/or change direction. The fourth signal can be transmitted using the second communication channel 514 and/or third communication channel 516 such that the robot 506 can receive the fourth signal even if it has lost communication with the CCS 508. Additionally or alternatively, at least one SGB 502 can transmit a fifth signal to the CCS 508 and/or to one or more other SGBs 502. The fifth signal is configured to inform the CCS 508 and/or the one or more other SGBs 502 of the detection of a potential collision with the robot 506. The fifth signal can comprise identifying information of the robot 506 such as its detected location and/or unique identification data.

In response to receiving the fifth signal, the CCS 508 can transmit the fourth signal configured to cause the robot 506 to move to prevent the collision, to the robot 506. In doing so, the robot 506 can receive the fourth signal even if it has lost and/or lacks communication capabilities using the second communication channel 514 and/or third communication channel 516. The CCS 508 can transmit the fourth signal to the robot 506 based on its own determination of a potential collision without having to receive the fifth signal from an SGB 502.

Operation 608 can further comprise deactivating, by the CCS 508, SVU 504 and/or SGBs 502, operations of the AS/RS 500 within the maintenance zone determined at operation 604, thereby preventing access to the maintenance zone to everything except the SVU 504 (and any associated SGBs 502). Deactivating operations within the maintenance zone can comprise transmitting a signal, by the CCS 508, SVU 504 or SGBs 502, to one or more robots 506 operating on the grid 510, wherein the signal configures them to be routed away from and/or around the maintenance zone such that only the SVU 504 is routed into the region of the grid 510 comprised by the maintenance zone. Additionally or alternatively, deactivating can be stopping movement of anything within the maintenance zone except for the SVU 504 (and any associated SGBs 502). In summary, deactivating the maintenance zone can prevent the CCS 508, SGBs 502 and/or robots 506 from generating and/or following routing paths on the grid 510 which enter the maintenance zone.

Preventing, using the one or more SGBs 502, a potential collision including the SVU 504 within the AS/RS 500 can comprise physically blocking contact with the SVU 504. Physically blocking contact with the SVU 504 can comprise causing one or more of the SGBs 502 to physically block the robot 506, thereby preventing the robot 506 from entering the maintenance zone and/or colliding with the SVU 504. Physically blocking contact with the SVU 504 can comprise one of the one or more SGBs 502 moving to a security location 520 on the path of the robot 506 such that the robot is physically blocked by the SGB 502. In embodiments in which the perimeter 518 of the maintenance zone is completely surrounded by the one or more SGBs 502, the SGBs 502 are not required to move as all paths into the maintenance zone are already blocked by an SGB 502 and therefore a robot 506 travelling towards the maintenance zone will always first be physically blocked by an SGB 502, thereby preventing both entry into the maintenance zone, and protecting the SVU 504. Physically blocking the robot 506 can be a redundancy measure for situations in which deactivating the maintenance zone and/or sending the fourth signal to the robot 506 do not prevent the potential collision. These situation can occur if the robot 506 loses all communication, loses power and/or otherwise malfunctions. Upon physically blocking the robot 506, the colliding SGB 502 can transmit a sixth signal to the CCS 508, SVU 504 and/or one or more other SGBs 502 notifying as to the collision. The maintenance zone and/or security location 520 can be dynamically updated based on the sixth signal.

### Penultimate comments

Although Fig. 5a,b is directed towards an AS/RS 500, it should be understood that the present disclosure is also directed towards the SGBs 502 used in system 500 and method 600. That is to say the present disclosure is additionally directed towards a security guard bot (SGB) 502 for an automated storage and retrieval system (AS/RS) 500 wherein the SGB 502 comprises a sensor and one or more communication modules and wherein the SGB 502 is configured to associate with a service vehicle unit (SVU) 504 for preventing potential collisions including the SVU 504 within the AS/RS 500. The SGB 502 can be as described with reference to Figs. 5a,b and can be configured in line with the SGBs 502 of method 600.

The present disclosure is also directed towards a computer-readable medium comprising instructions which, when executed by a processor of a device, causes the device to perform the method 600. In order to perform the method 600, upon executing the instructions, the device may configure one or more further devices required to perform the method.

The present disclosure is also directed towards an AS/RS 500 comprising an IoT enabled service vehicle unit 504, SVU, comprising one or more communication modules and one or more IoT enabled security guard bots 502, SGBs, comprising one or more communication modules, and configured to prevent a potential collision within the AS/RS 500 including the SVU 504. The SVU 504 can comprise a sensor. Each SGB 502 of the one or more SGBs 502 can comprise a sensor. The AS/RS 500 can perform the method 600.

The present disclosure is also directed towards an IoT enabled SVU 504 for an automated storage and retrieval system AS/RS. The IoT enabled SVU 504 can comprise a sensor and one or more communication modules. The SVU 504 can be as described with reference to Figs. 5a,b and can be configured in line with the SVU 504 of method 600.

Although the system 500 and method 600 are described with reference to a grid 510, it should be understood that the present disclosure is not limited to AS/RS 500 systems comprising a grid 510. It should be understood that the method 600 can operate with any AS/RS 500 comprising: a service vehicle unit 504, SVU, comprising one or more communication modules; and one or more security guard bots 502, SGBs , comprising one or more communication modules and configured to prevent a potential collision within the AS/RS 500 that include the SVU 504.

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

## Claims

1. A method for enhancing safety in an automated storage and retrieval system, AS/RS, comprising:
associating a service vehicle unit, SVU, with one or more security guard bots, SGBs;
preventing, using the one or more SGBs, a potential collision within the AS/RS that involves the SVU.

2. The method of claim 1, comprising:
determining, by a central control system, a route in the AS/RS for the SVU;
wherein associating the SVU with one or more SGBs comprises:
transmitting, by the central control system, to at least a first SGB of the one or more SGBs, a first signal configured to cause the one or more SGBs to move to a security location in proximity to the SVU; and optionally,
wherein transmitting the routing signal to the SVU uses a first communication channel.

3. The method of claim 1 or claim 2, wherein the SVU is communicatively coupled to the central control system using the first communication channel, and/or the SVU is communicatively coupled to the one or more SGBs using a second communication channel, and/or when there is more than one SGBs, the SGBs are communicatively coupled to each other using a third communication channel; the method further comprising:
synchronising movement of the one or more SGBs relative to the SVU using one or more of the first, second, or third communication channels.

4. The method of any one of claims 1-3, in which preventing the potential collision comprises:
determining, by the central control system, the one or more SGBs and/or the SVU, the security location for preventing the potential collision; and wherein preventing the potential collision comprises:
preventing access to a maintenance zone.

5. The method of claim 4, further comprising determining, by the central control system, the one or more SGBs and/or the SVU, the maintenance zone; and optionally,
wherein determining the security location comprises:
dynamically determining the security location; and
wherein determining the maintenance zone comprises:
dynamically determining the maintenance zone.

6. The method of claim 4 or 5, wherein the maintenance zone comprises a repair region of that AS/RS requiring maintenance from the SVU.

7. The method of any one of claims 4-6, further comprising deactivating, by the central computer system, operations of the AS/RS within the maintenance zone.

8. The method of any one of the preceding claims, wherein preventing the potential collision comprises:
detecting, by the one or more SGBs and/or the central control system, the potential collision comprising a robot moving within the AS/RS colliding with the SVU.

9. The method of claim 8, wherein the detecting is by the central control system, the method further comprising:
transmitting, by the central control system, to the one or more SGBs, using the first communication channel, a second signal comprising the location of the robot.

10. The method of claims 8 or 9 when the detecting is by the one or more SGBs, and wherein preventing the potential collision comprises:
detecting, using a sensor of one of the one or more SGBs, the potential collision; and optionally,
transmitting, by the one or more SGBs, to the central control system, a fifth signal configured to inform the central control system of the detected potential collision.

11. The method of any one of the preceding claims, wherein preventing the potential collision comprises:
transmitting, by the one or more SGBs and/or the central control system, to the SVU, a third signal configured to cause the SVU to move to prevent the collision.

12. The method of any one of claims 8-11, wherein preventing the potential collision comprises:
transmitting, by the one or more SGBs and/or the central control system, to the robot, a fourth signal configured to cause the robot to move to prevent the collision.

13. The method of any of claims 9-12 when dependent upon claim 8, wherein preventing the potential collision comprises:
transmitting, by the first SGB, to at least a second SGB of the one or more SGBs, the fifth signal configured to inform as to the detected potential collision.

14. The method of any one of the preceding claims, wherein preventing the potential collision comprises:
physically blocking contact with the SVU.

15. An automated storage and retrieval system, AS/RS, comprising:
a service vehicle unit, SVU, comprising one or more communication modules;
one or more security guard bots, SGBs, comprising one or more communication modules, the one or more SGBs configured to prevent a potential collision within the AS/RS including the SVU.

16. The AS/RS of claim 15, further comprising a central control system for managing communications within the AS/RS, wherein the central control system is communicatively coupled with the one or more SGBs and/or the SVU; and/or optionally,
wherein the one or more SGBs are communicatively coupled to the SVU and/or to each other when there is more than one SGB.

17. The AS/RS of any one of claims 15-16, comprising:
a rail system comprising at least a first set of parallel rails arranged in a horizontal plane and extending in a first direction, and at least a second set of parallel rails arranged in the horizontal plane and extending in a second direction which is orthogonal to the first direction, the at least first and second sets of rails together defining a grid of grid cells; and,
a robot configured to carry a storage container and operate on the rail system; and,
wherein the SVU and one or more SGBs are configured to operate on the rail system.

18. The AS/RS of any preceding claim configured to perform the method of preceding claims 1-14.

19. A security guard bot, SGB, for an automated storage and retrieval system AS/RS, the SGB comprising:
a sensor and one or more communication modules;
wherein the SGB is configured to associate with a service vehicle unit, SVU, for preventing potential collisions including the SVU within the AS/RS.

20. A computer-readable medium comprising instructions which, when executed by a processor of a device, cause the device to perform the method of any of claims 1-14.
